# EUROPEAN PATENT SPECIFICATION

(11) **EP 4 450 254 B1**
(45) Date of publication and mention of the grant of the patent: **29.04.2026**
(21) Application number: 24171333.8
(22) Date of filing: 19.04.2024
(51) Int. Cl.: B29C 49/00, B29C 49/06, B29C 49/10, B29C 49/02, B29K 67/00, B29K 79/00, B29K 91/00, B29K 105/26, B29K 279/00, B29L 31/00, C08J 3/22, C08K 5/29, C08L 91/06

(54) **STRETCH BLOW-MOLDED ARTICLE, TONER BOTTLE, AND METHOD FOR MANUFACTURING STRETCH BLOW-MOLDED ARTICLE, MOLDED ARTICLE, AND PELLET**
STRECKBLASGEFORMTER ARTIKEL, TONERFLASCHE UND VERFAHREN ZUR HERSTELLUNG EINES STRECKBLASGEFORMTEN ARTIKELS, FORMARTIKEL UND PELLET
ARTICLE MOULÉ PAR ÉTIRAGE-SOUFFLAGE, BOUTEILLE DE TONER ET PROCÉDÉ DE FABRICATION D'UN ARTICLE MOULÉ PAR ÉTIRAGE-SOUFFLAGE, ARTICLE MOULÉ ET PASTILLE

(30) Priority: 21.04.2023 JP 2023069974
(43) Date of publication of application: 23.10.2024
(73) Proprietor: CANON KABUSHIKI KAISHA, Tokyo 146-8501 (JP)
(72) Inventor: YAGI, Kota, Tokyo, 146-8501 (JP); ASHIBE, Tsunenori, Tokyo, 146-8501 (JP); DOI, Yohei, Tokyo, 146-8501 (JP)
(74) Representative: TBK

(56) References cited:
- EP-A1- 2 799 488
- WO-A1-2007/040243
- DE-A1- 102021 205 168
- DE-B4- 10 305 799
- JP-A- 2009 155 378
- JP-B2- 4 771 204
- US-A1- 2009 258 175
- US-A1- 2009 258 982
- US-A1- 2016 186 104
- US-A1- 2019 345 309
- LI HOUQIAN ET AL: "Expanding plastics recycling technologies: chemical aspects, technology status and challenges", GREEN CHEMISTRY : AN INTERNATIONAL JOURNAL AND GREEN CHEMISTRY RESOURCE : GC, 28 November 2022 (2022-11-28), pages 8899 - 92, XP093180438, Retrieved from the Internet <URL:https://chemrxiv.org/engage/api-gateway/chemrxiv/assets/orp/resource/item/62575f70ebac3a262fd3e505/original/expanding-plastics-recycling-technologies-chemical-aspects-technology-status-and-challenges.pdf> DOI: 10.1039/d2gc02588d

## Description

### BACKGROUND OF THE INVENTION

### Field of the Invention

The present disclosure relates to a stretch blow-molded article and a method for manufacturing a stretch blow-molded article.

### Description of the Related Art

For an electrophotographic image forming apparatus, the toner bottle for supplying a toner, or the like is required to have the strength enough to prevent breakage even at the time of falling, or the like. For this reason, a molded article obtained by injection stretch blow molding of polyethylene terephthalate (which may be hereinafter referred to as "PET") of a polyester resin is also often used. For example, Japanese Patent Application Publication No. 2001-042626 discloses a toner bottle by stretch blow molding.

In recent years, from the viewpoint of environmental protection, recycling of a PET bottle for beverage as a PET bottle again has been widely performed. Herein, as the recycling method of PET, chemical recycle and material recycle are known as described in the paragraphs [0008] and [0009] of Japanese Patent Application Publication No. 2014-198422.

Chemical recycle requires a multistage step as disclosed in Japanese Patent Application Publication No. 2000-169623, and decomposition facilities and purification treatment facilities therefor become necessary, resulting in a high recycle cost. Further, the environmental load is also large. On the other hand, the PET obtained by material recycle (which will be also hereinafter referred to as a "material recycled PET" or a "MR-PET") may be hydrolyzed by absorption of the moisture in the air by the PET resin, and subsequent heated for pelletizing, which may result in the reduction of the molecular weight. Further, as the PET resin is reduced in molecular weight, the time required for crystallization is shortened (THE NIKKAN KOGYO SHIMBUN, LTD., SATURATED POLYESTER RESIN HANDBOOK, edited by YUGI KAZUO December 22, 1989 initial edition p. 224 to p. 225).

Then, even when stretch blow molding is tried to be performed using the preform molded from the PET reduced in molecular weight, the PET is rapidly crystallized in the process of stretching. Accordingly, molding defect becomes more likely to be caused. As the method for making up for the defects of material recycle, mechanical recycle additionally including a step of performing repolymerization, and adjusting the intrinsic viscosity as described in the paragraph [0010] of Japanese Patent Application Publication No. 2014-198422 is known.

US 2009/258982 A1 relates to a biodegradable resin composition comprising 100 parts by mass of a biodegradable polyester resin such as polylactic acid and 0.1-15 parts by mass of a jojoba oil and/or a polar wax.

EP 2 799 488 A1 relates to a 4-methyl-1-pentene/olefin (co) polymer composition comprising a specific 4-methyl-1-pentene (co)polymer (A) and a specific 4-methyl-1-pentene/α-olefin copolymer (B) in a specific ratio.

US 2009/258175 A1 relates to a foam sheet made of a biodegradable resin composition containing a wax and/or a polyolefin resin, wherein the biodegradable resin is mainly composed of polylactic acid.

WO 2007/040243 A1 relates to a biodegradable resin composition comprising a biodegradable polyester resin, a layered silicate, and at least one component selected from a polyether phosphate ester compound, a polar wax and jojoba oil.

JP 2009-155378 A relates to a biodegradable polyester resin composition obtained by melt-kneading 100 pts.mass of biodegradable polyester resin A containing 50 mol.% or more of α- and/or β-hydroxy carboxylic acid unit, 0.01-20 pts.mass of (meth)acrylate compound B having two or more of (meth)acryl group in a molecule, or one or more of (meth)acryl group and one or more of glycidyl group or a vinyl group, and 0.01-20 pts.mass of peroxide C, and contains further 0.1-20 pts.mass of a crystallization retarder D in the resin composition.

JP 4 771204 B2 relates to a polyester resin composition obtained by melt-mixing two or more polyester resins comprising a thermoplastic polyester elastomer resin as an essential component of the component and having 10/90 to 99/1 mass ratio of Ge/Sb contained in the whole composition as the catalyst.

Houqian Li, et al (Expanding plastics recycling technologies: chemical aspects, technology status and challenges, Green Chemistry, Volume 24, Issue 23, 2022, Pages 8899-9002) reviews the entire life cycle of plastics and options for the management of plastic waste to address barriers to industrial chemical recycling and further provide perceptions on possible opportunities with such materials.

DE 103 05 799 B4 relates to preparing entirely or partly soluble, filled hollow articles (A) containing an agent (I), comprises preparing a thermoplastically processable material (B), containing at least one water-soluble thermoplast (C); stretching, dilating and/or blowing the material in at least one preferential direction to form (A); filling this with (I), particularly a washing, care and/or cleaning compound, and finally closing (A). Independent claims are also included for the following: (1) (A), particularly containing washing, care or cleaning agents, prepared by the new method; and (2) washing, cleaning and rinsing methods that use (A).

US 2019/345309 A1 relates to a resin composition comprising a modified EVOH (A) that is represented by a specific formula and having specified molar contents of monomer units, and has a degree of saponification (DS) of 90 mol % or more; and inorganic oxide particles (B), wherein a content of the inorganic oxide particles (B) is from 5 to 5000 ppm, wherein the resin is preferably used as a molded article, a film, a sheet, a heat shrinkable film, a thermoformed article, a multilayer structure, a coinjection stretch blow molded container, a fuel container, and the like.

US 2016/186104 A1 Relates to a cleaning mixture comprising polymeric resin pellets having a Rockwell R hardness of 85 to 140, water, and a surfactant salt comprising at least one of sulfonate salts, C6 to C36 carboxylic acid salts, or mixtures thereof, is used to purge the mixing device. The cleaning mixture has a pH of 6.0 to 9.0.

DE 10 2021 205168 A1 relates to the use of at least one sulphur-containing amino acid for stabilising thermoplastic plastic recyclates, stabilised thermoplastic plastic recyclate, stabiliser composition, masterbatch and moulding composition or moulded part.

Further on US 2009/258982 A1, EP 2 799 488 A1, WO 2007/040243 A1, JP 2009 155378 A, JP 4 771204 B2, XP093180438, DE 103 05 799 B4, US 2019/345309 A1 and US 2016/186104 A1 all relate to:
Stretch blow-molded articles comprising: a polyester; a wax; and at least one selected from the group consisting of an inorganic layered double hydroxide and zeolite.

### SUMMARY OF THE INVENTION

Solid phase polymerization in which the PET reduced in molecular weight is repolymerized requires much heat energy, and the environmental load is large. Further, a step of cleaning a bottle is generally performed in material recycle. However, cleaning of a bottle may be performed using water, an acid, an alkali, or the like a plurality of times, and further, a drying step also becomes necessary. For this reason, the cleaning of a bottle may also increase the environmental load.

The present inventors simplified or omitted cleaning of a toner bottle to be recycled, obtained a MR-PET from the toner bottle still including the toner adhered to the inside thereof, and manufactured a toner bottle using the MR-PET again from the viewpoint of the reduction of the environmental load. Then, the present inventors found the following. When a toner is accommodated in the toner bottle thus obtained, the surface of the toner particle may be deformed at the contact site between the toner in the toner bottle and the toner bottle inside surface. The toner particle with the deformed surface may cause faulty development, and the faulty development may cause image density non-uniformity in an electrophotographic image.

The reason why deformation is caused in the surface of the toner accommodated in the toner bottle molded using the MR-PET obtained from the toner bottle with the toner still adhered thereto is presumed by the present inventors as follows. Namely, it is considered that the toner bottle includes a wax included in the toner mixed therein. Then, it is considered that at least a part of the mixed wax is present on the surface inside the toner bottle. Then, it is considered that the contact between the toner accommodated in the toner bottle and the wax exposed to the surface inside the toner bottle deforms the surface of the toner particle. The deformation phenomenon of the toner particle surface due to the wax may be hereinafter referred to as chemical attack.

At least one aspect of the present disclosure is intended for providing a stretch blow-molded article capable of preventing the transfer of the wax to the surface of the blow-molded article on the assumption that a polyester including a wax is used for the raw material. Further, at least another aspect of the present disclosure is intended for providing a toner bottle capable of preventing the degradation of the accommodated toner. Further, at least a still other aspect of the present disclosure is intended for providing a method for manufacturing a stretch blow-molded article capable of preventing the transfer of the wax to the surface of the blow-molded article on the assumption that a polyester including a wax is used for the raw material.

Further, at least one aspect of the present disclosure is intended for providing a molded article capable of preventing the transfer of the wax to the surface on the assumption that a polyester including a wax is used for the raw material. Still further, at least one aspect of the present disclosure is intended for providing a pellet to contribute to the suppression of the transfer of the wax to the surface of the molded article.

The present invention in its first aspect provides a stretch-blow-molded article as specified in claims 1 to 6.

The present invention in its second aspect provides a method for manufacturing the stretch-blow-molded article as specified in claims 7 and 8.

In accordance with at least one aspect of the present disclosure, it is possible to obtain a stretch blow-molded article capable of preventing the transfer of a wax to the surface of the blow-molded article on the assumption that a polyester including a wax is used for the raw material. Further, in accordance with at least one aspect of the present disclosure, it is possible to obtain a toner bottle capable of preventing the degradation of the accommodated toner. Further, in accordance with at least one aspect of the present disclosure, it is possible to obtain a method for manufacturing a stretch blow-molded article capable of preventing the transfer of a wax to the surface of the blow-molded article on the assumption that a polyester including a wax is used for the raw material. Further features of the present invention will become apparent from the following description of exemplary embodiments with reference to the attached drawings.

### BRIEF DESCRIPTION OF THE DRAWINGS

FIG. 1 is a schematic view of an image forming apparatus;
FIG. 2 is a schematic view showing a molding method of a preform;
FIG. 3 is a schematic view showing a blow molding method;
FIG. 4 is a schematic view of 1-stage process blow molding;
FIG. 5 is a schematic view showing the transfer of a wax component; and
FIG. 6 is a schematic view of a blow bottle.

### DESCRIPTION OF THE EMBODIMENTS

Examples of implementations for carrying out the present disclosure will be explained next in detail with reference to accompanying drawings. In the present disclosure the notations "from XX to YY" and "XX to YY" representing a numerical value range signify, unless otherwise specified, a numerical value range that includes the lower limit and the upper limit of the range, as endpoints. In a case where numerical value ranges are described in stages, the upper limits and the lower limits of the respective numerical value ranges can be combined arbitrarily.

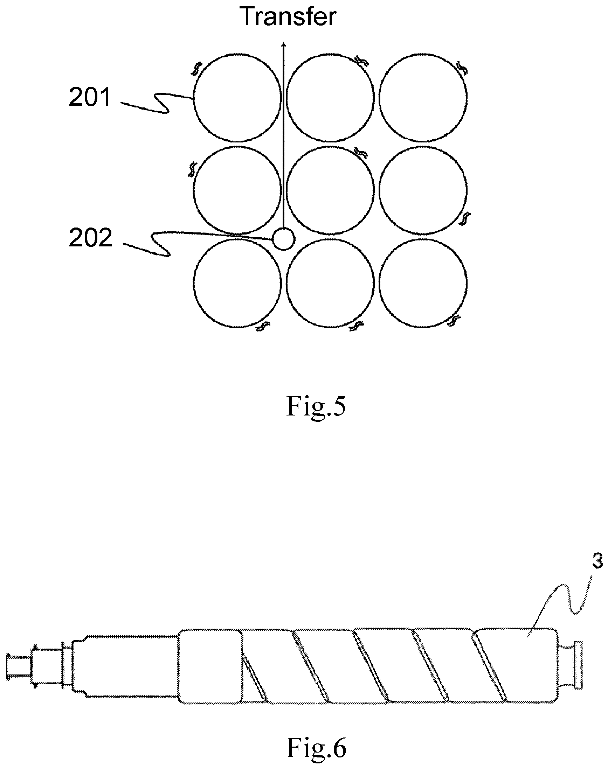

As described previously, it is considered that the wax mixed into the recycled polyester such as a MR-PET causes the chemical attack. As shown in FIG. 5, a wax 202 transfers to the surface of a bottle in the molding process of a toner bottle at which the temperature of a PET resin 201 becomes equal to or higher than the glass transition temperature. At the glass transition temperature of the PET resin 201, or higher, the PET resin 201 becomes vigorous in thermal motion. Then, the wax 202 transfers from the clearance of the PET resin 201 to the surface of the bottle.

Under such circumstances, the present inventors recognized the following. Even a stretch blow-molded article from a raw material including a material recycled polyester derived from a toner bottle requires the technology development for obtaining a stretch blow-molded article which is less likely to cause chemical attack on the toner in contact with the surface thereof. As a result of a continued study by the present inventors based on such recognition, they found that the following stretch blow-molded article is less likely to cause chemical attack on the toner in contact with the surface thereof.

Namely, a stretch blow-molded article in accordance with at least one aspect of the present disclosure comprises a polyester, a wax, and at least one selected from the group consisting of an inorganic layered double hydroxide and zeolite.

As a result of the study by the present inventors, they found the following. The presence of at least one selected from the group consisting of an inorganic layered double hydroxide and zeolite in a polyester comprising a wax can prevent the chemical attack.

The reason for this can be considered as follows. At least one selected from the group consisting of an inorganic layered double hydroxide and zeolite (which will be also hereinafter referred to as zeolite, or the like) adsorbs the wax, which suppresses the transfer of the wax onto the surface of the toner bottle. Particularly, a toner tends to be charged by friction with other members. For this reason, at least a part of the toner remaining in the toner bottle is considered to be charged with electric charges. Then, the state of the toner being charged with electric charges is considered to be kept even in a form of a MR-PET, and at least a part of the wax included in the MR-PET is also considered to be charged with electric charges. The wax thus charged with electric charges is considered to tend to be adsorbed by zeolite, or the like.

In the process of using a toner bottle at an electrophotographic image forming apparatus, the toner receives friction. For this reason, the toner is charged including the wax included in the toner. The state of the toner being charged is kept even in a form of a MR-PET, and hence the wax included in the MR-PET is generally charged. It is considered as follows. At least one selected from the group consisting of an inorganic layered double hydroxide and zeolite (which will be also hereinafter referred to as zeolite, or the like) adsorbs the charged wax, which can suppress the transfer of the wax to the bottle surface.

Therefore, the stretch blow-molded article in accordance with the present disclosure can be obtained by stretch blow molding of a preform as a molded article molded from a resin mixture comprising a polyester, a wax, and at least one selected from the group consisting of an inorganic layered double hydroxide and zeolite.

### Preform

The preform for use in stretch blow molding preferably comprises the following (a), (b), and (c).
(a) a wax
(b) at least one selected from the group consisting of an inorganic layered double hydroxide and zeolite, and
(c) a polyester

Zeolite, or the like is covered with a skin layer of a polyester at the time of molding a preform of a bottle precursor, and is less likely to be precipitated to the surface of the bottle. This inhibits the adsorbed wax from transferring to the surface of the bottle. The effect tends to prevent the chemical attack by the wax.

### Polyester

A polyester has no particular restriction, and a known polyester resin can be used. A polyester may be a thermoplastic polyester. A polyester preferably comprises at least one selected from the group consisting of polyethylene terephthalate and polyethylene naphthalate. A polyester more preferably comprises a polyethylene terephthalate (PET). A PET can be obtained by, for example, the condensation reaction or the transesterification reaction between terephthalic acid or an ester forming derivative thereof and 1,2-ethane diol or an ester forming derivative thereof. Further, a polyester may be a mixture with other resins. A polyester comprises a PET in an amount of preferably 60 to 100 mass%, more preferably 80 to 100 mass%, and further preferably 90 to 100 mass%.

A polyester is, for example, a recycled polyester. A polyester may be a MR-PET, and may be a PET of a virgin material not reduced in molecular weight. However, the polyester being a MR-PET resulting from recycle of a toner bottle allows the effect in accordance with the present disclosure to be remarkably produced. Therefore, a polyester is preferably a material recycled polyester, and more preferably a material recycled PET.

The weight-average molecular weight of a polyester is preferably 20,000 to 80,000, and more preferably 35,000 to 45,000. For example, the measurement of the weight-average molecular weight is performed using gel permeation chromatograph (GPC).

### Inorganic Layered Double Hydroxide

A stretch blow-molded article, a molded article, and a pellet each comprise at least one selected from the group consisting of an inorganic layered double hydroxide and zeolite. Incidentally, the presence of the inorganic layered double hydroxide and zeolite in a stretch blow-molded article, the molded article, or the pellet can be confirmed by the measurement using a micro FT-IR.

Examples of the inorganic layered double hydroxide may include kaolin and mica. Examples of compounds which are more effective and easily available include hydrotalcites compounds represented by the following general formula (1). An inorganic layered double hydroxide preferably comprises a hydrotalcites compound.

General formula (1): M²⁺_{(1-X)}M³⁺_{X}(OH)₂Aⁿ⁻(_{X/n})·mH₂O

(where 0 < X ≤ 0.5, m ≥ 0, M²⁺; a divalent metal ion such as Mg²⁺ or Zn²⁺, M³⁺; a trivalent metal ion such as Al³⁺ or Fe³⁺, Aⁿ⁻; an n-valent anion such as CO₃²⁻, Cl⁻, or NO₃⁻, and n is an integer of 1 or more)

The hydrotalcites compound represented by the general formula (1) is a layered compound including a positively charged basic layer [M²⁺_{(1-X)}M³⁺_{X}(OH)₂]^{X+}, and a negatively charged intermediate layer [Aⁿ⁻_{(X 'n)·}mH₂O]^{X-}, and can be considered to be an intercalation compound obtained by inserting the intermediate layer to the basic layer. Generally, the intercalation compound is known to exhibit a specific chemical property (reactivity). In the case of the hydrotalcites compound represented by the general formula (1), it is known that the anion (Aⁿ⁻) and the negative ion present at the ion intermediate layer are readily replaced (anion exchanged). Although the mechanism of anion exchange is not definite, it is presumed that the electric interaction (attraction) between the basic layer and an negative ion, the size of the void of the intermediate layer (the thickness of the intermediate layer), the adsorption action, and the like compositively act thereon.

In the general formula (1), preferably, the divalent metal ion M²⁺ is Mg²⁺, and the trivalent metal ion M³⁺ is Al³⁺. Further the n-valent anion is preferably CO₃²⁻ or Cl⁻.

The content of the inorganic layered double hydroxide is preferably 0.09 to 1.2 mass%, and more preferably 0.1 to 1.0 mass% based on the mass of the stretch blow-molded article, the molded article, or the pellet. When the content is 0.09 mass% or more, the wax can be more sufficiently adsorbed, so that the wax becomes less likely to transfer to the bottle surface. When the content is 1.2 mass% or less, at the time of blowing the preform, the inorganic layered double hydroxide is less likely to become the starting point of rupture. By setting the mixing amount within the foregoing range, it becomes easier to combine the chemical attack suppression and the blowability.

### Zeolite

Zeolite is a hydrous aluminosilicate including an alkali or alkaline-earth metal including a rigid negative ionic skeleton having a regular channel (tubular pore) and a cavity (hollow). Without particular restriction, natural or artificial (synthetic) one can be used.

Further, zeolite expressed by the following composition is preferable.

(M ^{I} ,M^{II}_{1/2})ₘ(AlₘSiₙO₂₍ₘ₊ₙ₎) • ₓH₂O, (n≧m)

M ^{I} : Li⁺, Na⁺, K⁺, etc , M ^{II}: Ca²+, Mg²+, Ba²+,

etc
M^{I} is preferably Na⁺. M^{II} is preferably Ca⁺. m is preferably 1 to 384. n is preferably 0 to 27.

Zeolites include zeolites having various skeleton structures. Namely, the skeleton structures of zeolite include a LTA type, a FER type, a MWW type, a MFI type, a MOR type, a LTL type, a FAU type, a BEA type, and the like certified by International Zeolite Association. In the present disclosure, although zeolite of any skeleton structure can be used, the MFI type is preferable. The MFI type (ZSM-5) is aluminosilicate zeolite having a skeleton structure in which pentacyl units whose chemical formula of the unit lattice is expressed by [NaₘAlₘSi₉₆₋ₘO₁₉₂·16H₂O (0 < m < 27)] are connected in a chain.

The content of zeolite is preferably 0.09 to 1.2 mass%, and more preferably 0.1 to 1.0 mass% based on the mass of the stretch blow-molded article (the molded article or the pellet). When the content is 0.09 mass% or more, the wax can be more sufficiently adsorbed, so that the wax becomes less likely to transfer to the surface of the bottle. When the content is 1.2 mass% or less, zeolite is less likely to become the starting point of rupture at the time of blowing the preform. By setting the mixing amount within the foregoing range, it becomes easier to combine the chemical attack suppression and the blowability.

From the viewpoint of combination of the chemical attack suppression and the blowability, the total content of the inorganic layered double hydroxide and zeolite is preferably 0.09 to 1.2 mass%, and more preferably 0.1 to 1.0 mass% based on the mass of the stretch blow-molded article (the molded article or the pellet).

The content ratio of the inorganic layered double hydroxide and zeolite in the stretch blow-molded article (the molded article or the pellet) can be measured by the following means. After measuring the mass of the stretch blow-molded article, the stretch blow-molded article is mounted in a container made of stainless steel, and then, is allowed to stand in a 480°C oven for 1 hour, thereby burning the resin of the blow-molded article. Subsequently, ion exchange water is placed in the container made of stainless steel including the residue therein. After sufficient stirring, filtration is performed by a nylon mesh with an opening size preventing the inorganic layered double hydroxide and zeolite from passing therethrough. The opening size may be selected in consideration of the sizes of other materials than the inorganic layered double hydroxide and zeolite. After filtration, the moisture is removed by a 100°C oven, and the mass is measured. The mass of the nylon mesh is subtracted therefrom. As a result, the content ratio can be measured. With this method, the catalyst, carbon black, and the like included in the resin pass through the nylon mesh. For this reason, it is possible to measure the content ratio of the inorganic layered double hydroxide and zeolite with precision. When the inorganic layered double hydroxide and zeolite cannot be separated only by filtration, the content can be measured by further combining known means.

The number-average particle diameter of the inorganic layered double hydroxide and zeolite is preferably 0.05 to 2.00 µm, and is more preferably 0.10 to 1.50 µm. A number-average particle diameter of 0.05 µm or more results in favorable dispersibility in the resin. A number-average particle diameter of 2.00 µm or less makes it difficult to form foreign matters in blow molding, which tends to suppress the rupture of the molded article.

### Wax

Waxes include the following ones. Examples thereof may include aliphatic hydrocarbon waxes such as low molecular weight polyethylene, low molecular weight polypropylene, a polyolefin copolymerized substance, polyolefin wax, microcrystalline wax, paraffin wax, and Fischer-Tropsch wax; oxides of aliphatic hydrocarbon wax such as polyethylene oxide wax; or block copolymerized substances thereof; plant type waxes such as Candelilla wax, Carnauba wax, Japan tallow, and jojoba wax; animal type waxes such as beeswax, lanoline, and spermaceti; mineral type waxes such as ozokerite, ceresin, and petrolatum; waxes including an aliphatic ester as the main component such as montanic acid ester wax and castor wax; and those obtained by deoxidizing a part of, or the whole of an aliphatic ester such as deoxidized Carnauba wax.

Further, examples may include saturated straight chain fatty acids such as palmitic acid, stearic acid, montanic acid, or long chain alkyl carboxylic acids having a further long chain alkyl group; unsaturated fatty acids such as brassidic acid, eleostearic acid, and parinaric acid; saturated alcohol such as stearyl alcohol, eicosyl alcohol, behenyl alcohol, carnabyl alcohol, ceryl alcohol, melissyl alcohol, or alkyl alcohol having a further long chain alkyl group; polyhydric alcohol such as sorbitol; aliphatic amides such as linolic acid amide, oleic acid amide, and lauric acid amide; saturated aliphatic bisamides such as methylene bisstearic acid amide, ethylene biscapric acid amide, ethylene bislauric acid amide, and hexamethylene bisstearic acid amide; unsaturated fatty acid amides such as ethylene bisoleic acid amide, hexamethylenebis oleic acid amide, N,N'-dioleyl adipic acid amide, and N,N'-dioleyl sebacic acid amide; aromatic-based bisamides such as m-xylene bisstearic acid amide and N,N'-distearyl isophthalic acid amide; fatty acid metal salts (those generally referred to as metal soap) such as calcium stearate, calcium laurate, zinc stearate, and magnesium stearate; waxes obtained by grafting aliphatic hydrocarbon waxes using a vinyl-based monomer such as styrene or acrylic acid; partially esterified products of fatty acid such as monoglyceride behenate and polyhydric alcohol; and a methyl ester compound having a hydroxyl group obtained by hydrogenating plant oils and fats.

Further, those obtained by making the molecular weight distribution of the waxes sharp using the press sweating method, the solvent method, the recrystallization method, the vacuum distillation method, the supercritical gas extraction method, or the melt crystallization method are preferably used. Alternatively, those obtained by removing the low molecular weight solid fatty acid, the low molecular weight solid alcohol, the low molecular weight solid compound, and other impurities are also preferably used.

The presence of the wax in the stretch blow-molded article (the molded article or the pellet) can be confirmed by GPC-FTIR.

Specific examples of the wax may include VISKOL (registered trademark) 330-P, 550-P, 660-P, and TS-200 (manufactured by Sanyo Chemical Industries, Ltd.), Hi-WAX 400P, 200P, 100P, 410P, 420P, 320P, 220P, 210P, and 110P (MITSUI CHEMICAL Inc.), SASOL H1, H2, C80, C105, and C77 (Schumann Sasol Co.), HNP-1, HNP-3, HNP-9, HNP-10, HNP-11, and HNP-12 (NIPPON SEIRO CO., LTD.), UNILIN (registered trademark) 350, 425, 550, and 700, UNICID (registered trademark) 350, 425, 550, and 700 (TOYO PETROLITE CO.), Japan tallow, beeswax, rice wax, Candelilla wax, and Carnauba wax (available at CERARICA NODA CO., LTD.).

The content ratio of the wax in the stretch blow-molded article (the molded article or the pellet) is 0.002 to 0.050 mass%, or 0.002 to 0.030 mass% based on the mass of the stretch blow-molded article (the molded article or the pellet). When the content ratio of the wax falls within the foregoing range, it is possible to prevent the wax from affecting the stretch blow moldability of the preform with more reliability.

Incidentally, the quantification of the presence of the wax in the PET resin can be attained by the measurement using, for example, pyrolysis GC/MS.

In the stretch blow-molded article (the molded article or the pellet), the total content of the inorganic layered double hydroxide and zeolite relative to 100 parts by mass of the wax is 400 to 5000 parts by mass, and preferably 450 to 4600 parts by mass.

The stretch blow-molded article (the molded article or the pellet) may comprise carbon black. For example, for appearance reason, carbon black may be added to the stretch blow-molded article. Examples of the content (mixing amount) of the carbon black in the stretch blow-molded article (the molded article or the pellet) may include 0.01 to 0.20 mass% and 0.02 to 0.10 mass%.

### Manufacturing of Stretch Blow-Molded Article

Then, one aspect of the method for manufacturing a stretch blow-molded article such as a toner bottle by 2-axis stretch blow molding will be described below. The method for manufacturing a stretch blow-molded article has a step of preparing a preform comprising a polyester, a wax, and at least one selected from the group consisting of an inorganic layered double hydroxide and zeolite, and a molding step of subjecting the preform to stretch blow molding, and obtaining a stretch blow-molded article.

First, an example of the method for manufacturing a pellet to serve as a material for a preform to be used for subjecting the stretch blow-molded article to 2-axis stretch blow molding will be shown. For example, at the step of preparing the preform, a polyester, a wax, and at least one selected from the group consisting of an inorganic layered double hydroxide and zeolite are melt-kneaded to mold a pellet. Molding into a pellet makes the material composition uniform, which facilitates molding.

The wax may be a toner comprising a wax. More specifically, a polyester, an electrophotographic toner comprising a wax, and at least one selected from the group consisting of an inorganic layered double hydroxide and zeolite are melt-kneaded to be molded into a pellet.

The following is also acceptable. In advance, at least one selected from the group consisting of an inorganic layered double hydroxide and zeolite is mixed, or melt-kneaded with a polyester, thereby obtaining a modified polyester. A toner comprising a wax is mixed or melt-kneaded therewith.

Furthermore, for example, a toner bottle comprising a polyester with an electrophotographic toner comprising a wax adhered thereto may be used. Namely, the step of preparing a preform preferably has a step of crushing a recycled toner bottle with an electrophotographic toner adhered thereto, and obtaining a crushed article, a step of melt-kneading the crushed article, and at least one selected from the group consisting of an inorganic layered double hydroxide and zeolite, and forming a pellet, and a step of forming the preform from the formed pellet. Then, preferably, the electrophotographic toner comprises a wax, and the toner bottle comprises a polyester.

The amount of the electrophotographic toner is preferably 0.100 to 1.000 mass%, and more preferably 0.150 to 0.500 mass% based on the total amount of the toner bottle and the electrophotographic toner adhered to the toner bottle.

The means of melt-kneading has no particular restriction, and a known means such as a 2-axis extruding machine can be adopted. The temperature for melt-kneading may only allow melt-kneading of a polyester, and has no particular restriction. The temperature is, for example, 120 to 300°C, and preferably 260 to 280°C. The conditions for melt-kneading also have no particular restriction. After melt-kneading, cooling is performed, and the melt-kneaded product may be molded into an injection moldable pellet shape using a known means such as a pelletizer.

After performing melt-kneading and forming a pellet, a step of crystallizing the pellet may be adopted. Crystallization of the pellet improves the workability for manufacturing a preform. Crystallization can be achieved by keeping the pellet under the conditions of preferably at 100 to 180°C, and more preferably at 130 to 170°C, and preferably for 1 to 12 hours, and more preferably for about 3 to 7 hours. Incidentally, even when the pellet is crystallized, the pellet can be made amorphous by heating for manufacturing a preform.

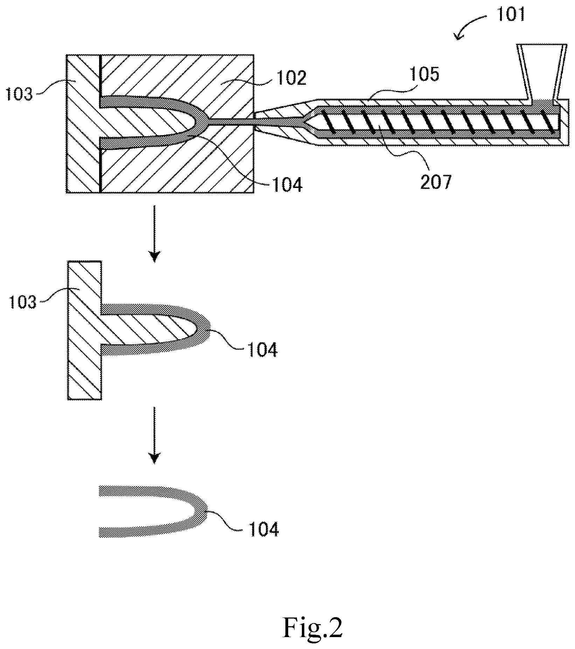

Then, using the obtained pellet, as shown in FIG. 2, a preform 104 having a test tube shape is molded by injection molding. Specifically, a heating cylinder 105 heats the material charged into an injection molding machine 101, and renders the material into a molten state. An extrusion screw 207 injects the material rendered in a molten state into preform molds 102 and 103. The material was cooled, and then, was removed from the molds, resulting in a preform 104. At the step of preparing a preform, a preform is preferably obtained from the resulting pellet by injection molding. Further, the preform preferably has a test tube shape.

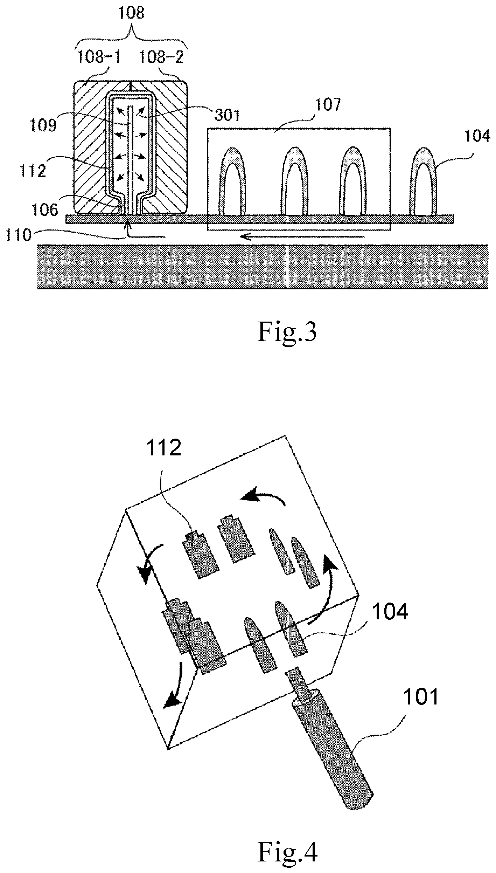

Then, the molding step will be described. At the molding step, as shown in FIG. 3, 2-axis stretch blowing (2-axis stretch molding) of the preform 104 is performed. First, the preform 104 is placed in a heating furnace 107, and is heated to a temperature allowing stretching. The heating time at this step is preferably within 3 minutes. By setting the heating time within 3 minutes, it is possible to prevent the progress of crystallization of the polyester in the preform during heating. The heated preform 104 is taken out from the heating furnace 107, and is arranged at the mouth part of a blow mold 108 including a cavity formed in the inside by combining a left-side mold 108-1 and a right-side mold 108-2.

Incidentally, the preform 104 is preferably set at the mouth part of the blow mold in a short time (e.g., in 10 seconds) so as to prevent the temperature of the heated preform 104 from being reduced until the start of the 2-axis stretching step. As a result of this, it is possible to prevent the progress of crystallization of the polyester in the preform due to gradual cooling of the preform.

The heated preform 104 set in the blow mold 108 is stretched in the longitudinal direction using a stretching rod 109. The stretching is referred to as the primary stretching. For primary stretching, a gas is preferably flowed so that the preform 104 may not come in contact with the stretching rod 109. The pressure of the gas at this step is referred to as a primary blow pressure.

After performing the primary stretching, a gas 110 is flowed from a preform mouth part 106, and the preform 104 is swollen in the transverse direction (circumferential direction). This is referred to as the secondary stretching. Further, the pressure of the gas at this step is referred to as a secondary blow pressure. Examples of the gas to be flown may include air, nitrogen, carbon dioxide, and argon.

By performing the primary stretching and the secondary stretching, the preform 104 is swollen in each direction indicated with an arrow 301, comes in close contact with the inner wall of the blow mold 108, and is cooled and solidified in that state, resulting in a blow-molded article 112. The molding step preferably has a step of stretching the preform 104 in the longitudinal direction of the preform 104 using a stretching rod, and a step of flowing a gas into the preform 104 stretched in the longitudinal direction, and stretching the preform 104 in the circumferential direction of the preform 104.

Then, by separating the left-side mold 108-1 and the right-side mold 108-2 of the blow mold 108, the blow-molded article 112 is taken out from the blow mold 108. The blow-molded article 112 is stretched in both the vertical and transverse directions, and hence becomes a molded article with high strength.

Thus, at the stretching step of injection stretch blow molding, the preform is preferably not crystallized (in an amorphous state). When the blow molding temperature is achieved in an amorphous state, by performing blowing, namely, 2-axis stretch molding as it is, the resin is stretched and crystallized in the stretched direction. This enables the formation of a bottle with high strength.

The injection stretch blow molding methods include the 1-stage method and the 2-stage method. The 1-stage method is the method in which stretch blow molding is performed using the remaining heat of the preform immediately after taking out of the mold as it is, or with heat regulation. The 2-stage method is the method in which the preform is once cooled to room temperature, and then, the preform is regulated in temperature again for performing stretch blow molding.

With the 1-stage method, as shown in FIG. 4, after subjecting the preform 104 to injection molding from the injection molding machine 101, cooling is terminated in a time as short as 10 seconds or less at the time of injection molding so as to prevent the temperature of the preform 104 from becoming equal to, or lower than the glass transition temperature of the resin. Then, immediately, heat keeping and heating to the blow molding temperature (e.g., from 90°C to 120°C) are performed, and blow molding is performed, resulting in a blow bottle 112. An apparatus including an injection molding device and a blow molding device integrated therein is used.

The 2-stage method is the method in which after subjecting the preform to injection molding, the preform is cooled to the glass transition temperature of the resin, or lower, and is taken out, subsequently, heating is performed to the blow molding temperature (e.g., from 90°C to 120°C) with another blow molding device for performing blow molding. An apparatus including an injection molding device and a blow molding device separately is used. For example, after molding the preform at the step of preparing the preform, the preform is cooled to the glass transition temperature of a polyester or lower. Then, the molding step is carried out.

The 1-stage method is preferable in that less energy for reheating is required as with the 2-stage method because the preform is not cooled to the glass transition temperature or lower.

Then, a description will be given to the method for confirming the chemical attack at the toner bottle obtained by the 2-axis stretch blow molding.

A toner is accommodated in the toner bottle obtained by the 2-axis stretch blow molding. The toner bottle including the toner accommodated therein is allowed to stand under usage environment. For the evaluation of the chemical attack, the usage environment was set at 50°C for 72 hours, and the toner bottle was allowed to stand in a thermostat for test. The toner bottle exposed under the usage environment was taken out, and the toner adhered to the bottle inside surface of the toner accommodated in the toner bottle is taken out. When the tonner accommodation port of the bottle is turned upside down, to discharge the toner from the bottle, and the toner adhered to the bottle inside surface is adhered by an sticky tape, or the like, the toner can be readily drawn out. The drawn toner is observed with an electron microscope, or the like, so that the deformation of the toner particle surface is observed. As a result, for a toner particle performing chemical attack, the mark of deformation can be observed at the contact surface with the toner bottle.

### Image Forming Apparatus

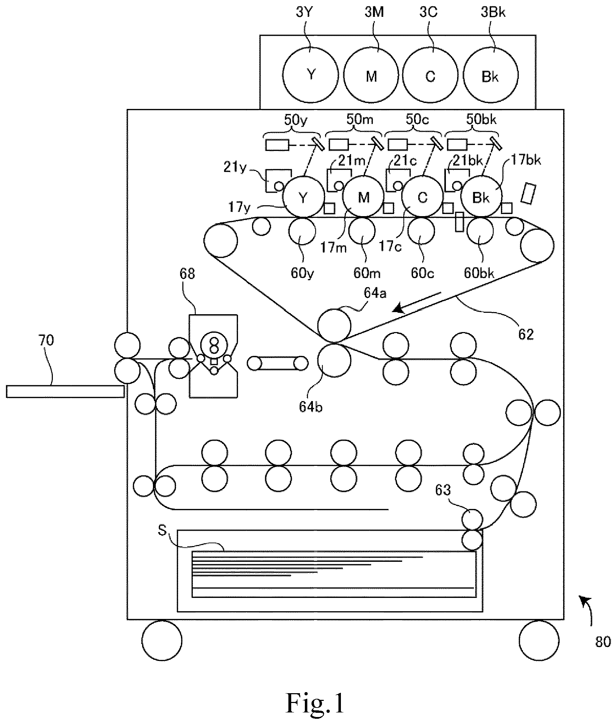

An image forming apparatus will be explained below next with reference to accompanying drawings. FIG. 1 is a schematic configuration explanatory diagram illustrating an electrophotographic four-color image forming apparatus where the reference symbol 80 denotes the main body of the image forming apparatus. The image forming apparatus 80 is configured as an image forming apparatus of so-called intermediate transfer tandem type in which four color image forming sections are arranged side by side on an intermediate transfer belt.

The image forming apparatus 80 carries out image formation as follows. In the image forming apparatus 80, respective electrostatic latent images are formed first on photosensitive drums 17 (17y, 17m, 17c, 17bk) by exposure devices 50 (50y, 50m, 50c, 50bk) on the basis of print data. In the image forming apparatus 80 the formed electrostatic latent images are developed by respective developing apparatuses 21 (21y, 21m, 21c, 21bk), to form respective toner images.

In the image forming apparatus 80, the toner images are transferred onto an intermediate transfer body 62 by primary transfer devices 60 (60y, 60m, 60c, 60bk), whereupon a resulting toner image is transferred, in a secondary transfer section 64 (64a, 64b), onto a sheet material S that is supplied from a paper feeding device 63. In the image forming apparatus 80, the toner image transferred onto the sheet S is fixed on the sheet material S by a fixing means 68, followed by discharge onto a paper discharge tray 70.

In the image forming apparatus 80, where toner images are formed by the developing apparatuses 21, detachable toner bottles 3 (3Y, 3M, 3C, 3Bk) are used for the purpose of supplying respective toners to the developing apparatuses 21. The toner bottle according to at least one aspect of the present disclosure is used thus in the above manner.

A toner bottle comprises a polyester; a wax; and at least one selected from the group consisting of an inorganic layered double hydroxide and zeolite.

### Examples

Below, by way of Examples and Comparative Examples, the present disclosure will be described in details. However, the present disclosure is not limited to the Examples. In the following Examples and Comparative Examples, "%" means "mass%" unless otherwise specified.

### Manufacturing of Toner Bottle

Using a 1-stage process blow molding device (ASB-70DPH manufactured by NISSEI ASB MACHINE CO., LTD.), a toner bottle 3 (with a total length of 439.5 mm, and a diameter of 101 mm) shown in FIG. 6 was manufactured. The blow stretch ratio was set at "vertical ratio x transverse ratio = 6.7".

The "vertical ratio" of the blow stretch ratio is the value calculated by dividing the "total length after stretching" by the "total length (before stretching) of the portion (the heating part) of the preform to reach the stretching temperature".

The "transverse ratio" of the blow stretch ratio is the value calculated by dividing the "diameter of the intermediate portion after stretching" by the "diameter of the intermediated portion (before stretching) of the preform".

First, the materials described in the following Table 1 were melt-kneaded, followed by pelletization, thereby preparing a master batch with a carbon black concentration of 5 mass%.

**[Table 1]**

| Material | Mixing ratio |
|---|---|
| Carbon black (Tradename: MA-100; manufactured by Mitsubishi Chemical Corporation) | 5 mass% |
| PET (Tradename: TRN-8550FF; manufactured by TEIJIN LIMITED) | 95 mass% |

Then, the master batch with a carbon black concentration of 5 mass% prepared as described above and a PET were mixed in the ratios of the following Table 2, and the resulting mixture was melt-kneaded, followed by pelletization, resulting in a pellet of a resin mixture. The resulting pellet was dried at a temperature of 150°C for 5 hours.

**[Table 2]**

| Material | Mixing ratio |
|---|---|
| Carbon black concentration 5% master batch | 1.4 mass% |
| PET (Tradename: TRN-8550FF; manufactured by TEIJIN LIMITED) | 98.6 mass% |

### Blow Molding Conditions

Pellets of the resin mixture dried as described above were charged into an injection molding apparatus of a one-step stretch blow molding machine (product name: ASB-70DPH; by Nissei ASB Machine Co., Ltd.), and biaxial stretch blow molding was carried out, to mold a toner bottle. The above one-step stretch blow molding machine sequentially executes a step of obtaining a test tube-shaped preform by injection molding, and a step of subjecting the preform to biaxial stretch blow molding, to yield a bottle-shaped molded article (single-stage method). The screw diameter of the injection molding machine in the molding machine was 54 mm.

As a preform molding mold there was prepared first a mold capable of molding a preform having an outer diameter of 30 mm, a wall thickness of 3.7 mm, and a length of 220 mm. A preform was then molded under the following molding conditions.
- Screw diameter: 54 mm
- Screw position prior to filling of resin mixture into cavity: 95 mm
- Injection speed
   Up to 5 mm of screw advance: 50% of maximum speed
   Up to 20 mm of further screw advance: 30% of maximum speed
   Up to 35 mm of further screw advance: 25% of maximum speed
   PV switch position: 35 mm
- Injection pressure
   - Up to PV switch: 12.0 MPa
   - After pV switch: 4.5 MPa (pressure holding)
- Pressure holding time after PV switch
   - 4.57 seconds
- Heating cylinder temperature: 280°C
- Cooling time: 8.0 seconds
- Mold temperature: 18°C

Once a cooling time of 8.0 seconds had elapsed, the preform was thereafter demolded and was conveyed to a biaxial stretch blow station of the one-step stretch blow molding machine. The temperature of the preform during conveyance was controlled as follows.
- Preform heating temperature
   10% of the total length of the preform from the top thereof: 180°C
   25% of the total length of the preform from the top thereof: 200°C
   50% of the total length of the preform from the top thereof: 200°C
   75% of the total length of the preform from the top thereof: 180°C

The preform adjusted to the above temperature was set in a cylindrical mold having a size corresponding to the size of the toner bottle and having been adjusted to a temperature of 18°C, and biaxial stretch blow molding was carried out thereupon, to produce a blow bottle. The preform being transported was heated, whereby the surface temperature of the center of the preform immediately prior to entering the cylindrical mold was 100°C.

Firstly, the stretching rod was inserted from a retracted position into the preform, through the opening of the preform, and was driven forward until coming into contact with the apex of the preform. The air pressure for driving the stretching rod was set to 1.2 MPa, whereupon the stretching rod was further driven forward. Next, primary air was introduced into the preform through the opening thereof 0.5 seconds after the start of this further advancement of the stretching rod. The pressure of the primary air was set to 1.0 MPa. Secondary air was subsequently introduced 0.15 seconds after the introduction of the primary air. The pressure of the secondary air was set to 2.9 MPa. Air was introduced into the preform over 7.0 seconds, from the start of introduction of primary air. The pressure inside the preform was then reverted to normal pressure over 2.5 seconds. A toner bottle produced by blow molding was thus obtained. This bottle is a toner bottle of unrecycled virgin PET.

According to the above method, 200 toner bottles using virgin PET were prepared.

### Example 1-1

### Manufacturing of Recycle Pellet

Two hundred unused toner cartridges (trade name: Toner NPG-67: manufactured by CANON INC.) filled with a black toner were prepared. The black toner includes a wax. The total amount of the black toner in respective toner cartridges was transferred to the 200 toner bottles prepared as described above. Thereafter, the opening of the toner bottle was pointed vertically downward, thereby discharging the black toner in the inside thereof. Also after this operation, a small amount of the black toner was adhered to the inner wall of each of the toner bottles.

At this step, the black toner left in the toner bottle was in an amount of 0.321 mass% based on the mass of the toner bottle main body in terms of the average value of those of the 200 toner bottles. Incidentally, herein, the mass of the toner bottle main body is the mass of the toner bottle and only the toner left in the inside thereof after removing all the supply components and the like mounted in the toner bottle.

Then, each of the toner bottles was crushed to a size of about 5 to 10 mm square using a crusher, resulting in a crushed article (which will be also hereinafter referred to as a "flake product"). For the obtained flake product, the wax content was measured using a GPC, and a FT-IR, and was found to be 0.022 parts by mass for every 100 parts by mass of the flake product.

To 99.5 mass% of the flake product, a hydrotalcites compound (trade name: DHT-4C; manufactured by Kyowa Chemical Industry Co., Ltd.) was added in an amount of 0.5 mass% as an inorganic layered double hydroxide, and the resulting mixture was melt-kneaded using a 2-axis extruding machine (PC-46 manufactured by IKEGAI Co., Ltd.) at a temperature of 260°C, a screw rotation speed of 200 rpm, and a discharge rate of 50 kg/h, followed by pelletization. The inorganic layered double hydroxide herein used was in a filler shape, and had a number-average particle diameter of 0.38 µm.

The pellet obtained by melt-kneading with an extruding machine was kept at a temperature of 150°C for 5 hours, thereby crystallizing a pellet for molding (The recycled material is referred to as a MR-PET (1-1)).

### Manufacturing of Blow Bottle

The MR-PET (1-1) was charged into the one step stretch blow molding machine, and 2-axis stretch blow molding was performed in the same manner as the blow molding conditions (the resultant toner bottle is referred to as a toner bottle (1-1)). A toner was accommodated in the toner bottle (1-1), so that a confirmation test of chemical attack was carried out under environment of at 50°C and for 72 hours. As a result, even when the toner adhered to the inside surface of the toner bottle was observed, the deformation of the toner particle surface was not confirmed.

Blow molding was performed in the same manner as in Example 1-1, except that the mixing ratios of the flake product and the inorganic layered double hydroxide (hydrotalcites compound) were changed as shown in Table 3 in Example 1-1, resulting in toner bottles (1-2) and (1-3), and a comparative toner bottle (1-4). All the toner bottles could be blow molded without a problem.

For each of the obtained toner bottles, the deformation of the toner particle surface was observed in the same manner as in Example 1-1.

**[Table 3]**

| | Mixing ratio (mass%) | | Content of inorganic layered double hydroxide relative to 100 parts by mass of wax (parts by mass) | Blow moldability | Occurrence or non-occurrence of chemical attack |
|---|---|---|---|---|---|
| | Flake product | Inorganic layered double hydroxide | | | |
| Toner bottle No. | | | | | |
| 1-1 | 99.5 | 0.5 | 2269 | OK | Not observed |
| 1-2 | 99.0 | 1.0 | 4560 | OK | Not observed |
| 1-3 | 99.9 | 0.1 | 452 | OK | Not observed |
| 1-4 | 100.0 | 0.0 | 0 | OK | Observed |

### Toner Bottle (1-2)

The 2-axis stretch blow molding of the preform was performed in an amount of an inorganic layered double hydroxide to be added of 1.0 mass%. As a result, blow molding was possible without a problem. Using the toner bottle (1-2), evaluation of the chemical attack was performed. As a result, even when the toner adhered to the inside surface of the toner bottle was observed, the deformation of the toner particle surface was not confirmed.

### Toner Bottle (1-3)

The 2-axis stretch blow molding of the preform was performed in an amount of an inorganic layered double hydroxide to be added of 0.1 mass%. As a result, blow molding was possible without a problem. Using the toner bottle (1-3), evaluation of the chemical attack was performed. As a result, even when the toner adhered to the inside surface of the toner bottle was observed, the deformation of the toner particle surface was not confirmed.

### Comparative Toner Bottle (1-4)

The 2-axis stretch blow molding of the preform was performed in an amount of an inorganic layered double hydroxide to be added of 0.0 mass%. As a result, blow molding was possible without a problem. Using the comparative toner bottle (1-4), evaluation of the chemical attack was performed. As a result, the deformation of the surface of the toner particle adhered to the inside surface of the toner bottle was confirmed, and chemical attack occurred. The reason for this is considered as follows. When an inorganic layered double hydroxide is not added, the wax causing chemical attack is not adsorbed by the inorganic layered double hydroxide, and hence the wax transfers to the inside surface of the toner bottle. As a result, chemical attack occurs.

### Manufacturing of Recycled Pellet

### Example 2-1

Zeolite (trade name: SILTON MT-8000 manufactured by Mizusawa Industrial Chemicals, Ltd.) was added in an amount of 0.5 mass% to 99.5 mass% of the flake product prepared in the same manner as in Example 1-1, and the resulting mixture was melt-kneaded at a temperature of 260°C, a screw rotation speed of 200 rpm, and a discharge amount of 50 kg/h using a 2-axis extruding machine (PC-46 manufactured by IKEGAI Co., Ltd.), followed by pelletization. The zeolite herein used was in a filler shape. The pellet obtained by melt-kneading by an extruding machine was kept at a temperature of 150°C for 5 hours, thereby crystallizing a pellet for molding (The recycled material is referred to as a MR-PET (2-1)).

### Manufacturing of Blow Bottle

A MR-PET (2-1) was charged into the one step stretch blow molding machine, and 2-axis stretch blow molding was performed in the same manner as under the blow molding conditions (the obtained toner bottle is referred to as a toner bottle (2-1)). A toner was accommodated in the toner bottle (2-1), and the confirmation test of the chemical attack was carried out under environment of at 50°C and for 72 hours. As a result, even when the toner adhered to the inside surface of the toner bottle was observed, the deformation of the toner particle surface was not confirmed.

Blow molding was performed in the same manner as in Example 2-1, except for changing the mixing ratios of the flake product and zeolite as shown in Table 4 in Example 2-1, resulting in toner bottles (2-2) and (2-3), and a comparative toner bottle (2-4). All of the toner bottles could be blow molded without a problem.

For each of the obtained toner bottles, the deformation of the toner particle surface was observed in the same manner as in Example 2-1.

**[Table 4]**

| | Mixing ratio (mass%) | | Content of zeolite for every 100 parts by mass of wax (parts by mass) | Blow moldability | Occurrence or non-occurrence of chemical attack |
|---|---|---|---|---|---|
| | Flake product | Zeolite | | | |
| Toner bottle No. | | | | | |
| 2-1 | 99.5 | 0.5 | 2269 | OK | Not observed |
| 2-2 | 99.0 | 1.0 | 4560 | OK | Not observed |
| 2-3 | 99.9 | 0.1 | 452 | OK | Not observed |
| 2-4 | 100.0 | 0.0 | 0 | OK | Observed |

### Toner Bottle (2-2)

The 2-axis stretch blow molding of the preform was performed in an amount of zeolite to be added of 1.0 mass%. As a result, blow molding was possible without a problem. Using the toner bottle (2-2), evaluation of the chemical attack was performed. As a result, even when the toner adhered to the inside surface of the toner bottle was observed, the deformation of the toner particle surface was not confirmed.

### Toner Bottle (2-3)

The 2-axis stretch blow molding of the preform was performed in an amount of zeolite to be added of 0.1 mass%. As a result, blow molding was possible without a problem. Using the toner bottle (2-3), evaluation of the chemical attack was performed. As a result, even when the toner deposited on the inside surface of the toner bottle was observed, the deformation of the toner particle surface was not confirmed.

### Comparative Toner Bottle (2-4)

The 2-axis stretch blow molding of the preform was performed in an amount of zeolite to be added of 0.0 mass%. As a result, blow molding was possible without a problem. Using the comparative toner bottle (2-4), evaluation of the chemical attack was performed. As a result, deformation was confirmed on the surface of the toner particle adhered to the inside surface of the toner bottle, and chemical attack occurred. The reason for this is considered as follows. When zeolite is not added, the wax causing chemical attack is not adsorbed by zeolite. For this reason, the wax transfers to the inside surface of the toner bottle, so that chemical attack occurs.

While the present invention has been described with reference to exemplary embodiments, it is to be understood that the invention is not limited to the disclosed exemplary embodiments.

## Claims

1. A stretch blow-molded article comprising:
a polyester;
a wax; and
at least one selected from the group consisting of an inorganic layered double hydroxide and zeolite, wherein
the content ratio of the wax in the stretch blow-molded article is 0.002 to 0.050 mass% based on the mass of the stretch blow-molded article, and
the total content of the inorganic layered double hydroxide and zeolite relative to 100 parts by mass of the wax is 400 to 5000 parts by mass.

2. The stretch blow-molded article according to claim 1, wherein
a total content of the inorganic layered double hydroxide and the zeolite is 0.09 to 1.2 mass% based on a mass of the stretch blow-molded article.

3. The stretch blow-molded article according to claim 1 or 2, wherein
the inorganic layered double hydroxide comprises a hydrotalcites compound.

4. The stretch blow-molded article according to any one of claims 1 to 3, wherein
the polyester is a material recycled polyester.

5. The stretch blow-molded article according to any one of claims 1 to 4, wherein the polyester comprises at least one selected from the group consisting of polyethylene terephthalate and polyethylene naphthalate.

6. The stretch blow-molded article according to any one of claims 1 to 5, wherein the stretch blow-molded article is a toner bottle.

7. A method for manufacturing the stretch blow-molded article according to any one of claims 1 to 6, the method comprising:
a step of preparing a preform comprising the polyester, the wax, and at least one selected from the group consisting of the inorganic layered double hydroxide and the zeolite; and
a molding step of subjecting the preform to stretch blow molding, and obtaining the stretch blow-molded article.

8. The method for manufacturing the stretch blow-molded article according to claim 7, wherein
the step of preparing the preform has:
a step of crushing a recycled toner bottle with an electrophotographic toner adhered thereto, and obtaining a crushed article;
a step of melt-kneading the crushed article, and at least one selected from the group consisting of the inorganic layered double hydroxide and the zeolite, and forming a pellet; and
a step of forming the preform from the formed pellet, wherein
the electrophotographic toner comprises the wax, and
the toner bottle comprises the polyester.

## Patentansprüche

1. Streckblasgeformter Artikel, der umfasst:
ein Polyester;
ein Wachs; und
mindestens eines ausgewählt aus der Gruppe bestehend aus einem anorganischen geschichteten Doppelhydroxid und Zeolith, wobei
das Gehaltsverhältnis des Wachses im streckblasgeformten Artikels 0,002 bis 0,050 Massen-%, basierend auf der Masse des streckblasgeformten Artikels, beträgt und
der Gesamtgehalt des anorganischen geschichteten Doppelhydroxids und Zeoliths, basierend auf 100 Gewichtsteilen des Wachses, 400 bis 5000 Massenteile beträgt.

2. Streckblasgeformter Artikel nach Anspruch 1, wobei
der Gesamtgehalt des anorganischen geschichteten Doppelhydroxids und Zeoliths 0,09 bis 1,2 Massen-%, basierend auf der Masse des streckblasgeformten Artikels, beträgt.

3. Streckblasgeformter Artikel nach Anspruch 1 oder 2, wobei
das anorganische geschichtete Doppelhydroxid eine Hydrotalcitverbindung umfasst.

4. Streckblasgeformter Artikel nach einem der Ansprüche 1 bis 3, wobei
der Polyester ein recycelter Polyester ist.

5. Streckblasgeformter Artikel nach einem der Ansprüche 1 bis 4, wobei der Polyester mindestens eines ausgewählt aus der Gruppe bestehend aus Polyethylenterephthalat und Polyethylennaphthalat umfasst.

6. Streckblasgeformter Artikel nach einem der Ansprüche 1 bis 5, wobei der streckblasgeformte Artikel eine Tonerflasche ist.

7. Verfahren zur Herstellung des streckblasgeformten Artikels nach einem der Ansprüche 1 bis 6, wobei das Verfahren umfasst:
einen Schritt zum Anfertigen eines Vorformlings, der den Polyester, das Wachs und mindestens eines ausgewählt aus der Gruppe bestehend aus dem anorganischen geschichteten Doppelhydroxid und dem Zeolith umfasst; und
einen Formungsschritt, bei dem der Vorformling einem Streckblasformen unterzogen wird und der streckblasgeformte Artikel erhalten wird.

8. Verfahren zur Herstellung des streckblasgeformten Artikels nach Anspruch 7, wobei
der Schritt des Anfertigens der Vorform umfasst:
einen Schritt des Zerkleinerns einer recycelten Tonerflasche, an der elektrofotografischer Toner haftet, und des Erhaltens eines zerkleinerten Artikels;
einen Schritt des Schmelzknetens des zerkleinerten Artikels und mindestens eines ausgewählt aus der Gruppe bestehend aus dem anorganischen geschichteten Doppelhydroxid und dem Zeolith, und des Bildens eines Pellets; und
einen Schritt des Bildens des Vorformlings aus dem gebildeten Pellet, wobei
der elektrofotografische Toner das Wachs umfasst und
die Tonerflasche den Polyester umfasst.

## Revendications

1. Article moulé par étirage-soufflage comprenant :
un polyester ;
une cire ; et
au moins un élément choisi dans le groupe constitué d'hydroxyde double lamellaire inorganique et de zéolite,
dans lequel
le rapport de teneur de la cire dans l'article moulé par étirage-soufflage est de 0,002 à 0,050 % en masse par rapport à la masse de l'article moulé par étirage-soufflage, et
la teneur totale en hydroxyde double lamellaire inorganique et en zéolite par rapport à 100 parties en masse de la cire est de 400 à 5000 parties en masse.

2. Article moulé par étirage-soufflage selon la revendication 1, dans lequel
une teneur totale en hydroxyde double lamellaire inorganique et en zéolite est de 0,09 à 1,2 % en masse par rapport à une masse de l'article moulé par étirage-soufflage.

3. Article moulé par étirage-soufflage selon la revendication 1 ou 2, dans lequel
l'hydroxyde double lamellaire inorganique comprend un composé d'hydrotalcite.

4. Article moulé par étirage-soufflage selon l'une quelconque des revendications 1 à 3, dans lequel
le polyester est un matériau polyester recyclé.

5. Article moulé par étirage-soufflage selon l'une quelconque des revendications 1 à 4, dans lequel le polyester comprend au moins un élément choisi dans le groupe constitué de polyéthylène téréphtalate et de polyéthylène naphtalate.

6. Article moulé par étirage-soufflage selon l'une quelconque des revendications 1 à 5, dans lequel l'article moulé par étirage-soufflage est une bouteille de toner.

7. Procédé de fabrication de l'article moulé par étirage-soufflage selon l'une quelconque des revendications 1 à 6, le procédé comprenant :
une étape de préparation d'une préforme comprenant le polyester, la cire, et au moins un élément choisi dans le groupe constitué d'hydroxyde double lamellaire inorganique et de zéolite ; et
une étape de moulage consistant à soumettre la préforme à un moulage par étirage-soufflage et à obtenir l'article moulé par étirage-soufflage.

8. Procédé de fabrication de l'article moulé par étirage-soufflage selon la revendication 7, dans lequel
l'étape de préparation de la préforme comprend :
une étape de broyage d'une bouteille de toner recyclée à laquelle du toner électrophotographique est collé, et d'obtention d'un article broyé ;
une étape de fusion-pétrissage de l'article broyé et d'au moins un élément choisi dans le groupe constitué d'hydroxyde double lamellaire inorganique et de zéolite, et de formation d'une pastille ; et
une étape de formation de la préforme à partir de la pastille formée, dans lequel
le toner électrophotographique comprend la cire, et
la bouteille de toner comprend le polyester.
